# EUROPEAN PATENT APPLICATION

(11) **EP 4 726 874 A1**
(43) Date of publication of application: **15.04.2026**
(21) Application number: 24913486.7
(22) Date of filing: 29.11.2024
(51) Int. Cl.: H01M 50/167, H01M 50/107, B23P 11/00

(54) **CRIMPING APPARATUS OF CYLINDRICAL BATTERY**

(30) Priority: 27.12.2023 KR 20230193315; 01.02.2024 KR 20240015905
(71) Applicant: LG Energy Solution, Ltd., Seoul 07335 (KR)
(72) Inventor: SHIN, Jae-Gil, Daejeon 34122 (KR); PARK, Kyeong-Hoon, Daejeon 34122 (KR); LEE, Je-Jun, Daejeon 34122 (KR); JUNG, Ji-Min, Daejeon 34122 (KR)
(74) Representative: Goddar, Heinz J.
(86) International application number: PCT/KR2024/019396
(87) International publication number: WO 2025/143593

(57) **Abstract**

A crimping device configured to crimp a housing of a cylindrical battery includes: a punch configured to crimp the housing by pressing an upper end of the housing; and a fixing unit including a punch insertion portion into which the punch is inserted and a can support portion supporting at least a portion of the housing and extending in one direction from the punch insertion portion while forming a stepped portion with the punch insertion portion.

## Description

### TECHNICAL FIELD

The present disclosure relates to a crimping device of a cylindrical battery. More particularly, the present disclosure relates to a crimping device of a cylindrical battery, which may minimize damage to the cylindrical battery during a crimping process of the cylindrical battery.

This application is based on and claims priority from Korean Patent Application No. 10-2023-0193315, filed on December 27, 2023, with the Korean Intellectual Property Office, the disclosure of which is incorporated herein in its entirety by reference.

This application is based on and claims priority from Korean Patent Application No. 10-2024-0015905, filed on February 01, 2024, with the Korean Intellectual Property Office, the disclosure of which is incorporated herein in its entirety by reference.

### BACKGROUND ART

In general, secondary batteries refer to batteries that may be charged and discharged, unlike primary batteries that may not be charged, and are widely used in electronic devices such as mobile phones, laptop computers, and camcorders or power sources for electric vehicles and the like. Especially, because lithium secondary batteries have an operating voltage of 3.6 V, have a capacity that is about 3 times that of nickelcadmium batteries or nickel-hydrogen batteries, which are widely used as power sources for electronic equipment, and have high energy density per unit weight, the utilization of lithium secondary batteries is rapidly increasing.

Such a lithium secondary battery mainly uses a lithium-based oxide and a carbon material as a positive electrode active material and a negative electrode active material, respectively. In addition, lithium secondary batteries may be manufactured in various types and may be classified into prismatic batteries, cylindrical batteries, and pouch-type batteries.

A typical cylindrical secondary battery is formed by putting an electrolyte and an electrode assembly in a housing formed of a metal material, assembling a cap assembly at the top, and sealing an open upper end of the housing through a crimping process using a crimping device.

In such a crimping process of a cylindrical battery in the related art, there are problems that an upper end or an outer circumferential surface of a housing is scratched by a crimping device, or a dent or burr phenomenon occurs under a middle part of the upper end of the housing, often resulting in quality issues.

Accordingly, there is a need to develop a crimping device of a cylindrical battery having a structure capable of solving these problems.

### DISCLOSURE

### Technical Problem

The present disclosure is designed to solve the problems of the related art, and therefore the present disclosure is directed to providing a crimping device that may facilitate a crimping process of a cylindrical battery and minimize scratches, dents, or burrs of the cylindrical battery during the crimping process.

However, technical problems to be solved by the present disclosure are not limited to the above-described problems, and other unmentioned problems may be clearly understood by one of ordinary skill in the art from the following description of the present disclosure.

### Technical Solution

In one aspect of the present disclosure, a crimping device configured to crimp a housing of a cylindrical battery includes: a punch configured to crimp the housing by pressing an upper end of the housing; and a fixing unit including a punch insertion portion into which the punch is inserted and a can support portion supporting at least a portion of the housing and extending in one direction from the punch insertion portion while forming a stepped portion with the punch insertion portion.

The can support portion may be at least partially spaced apart from the housing by a certain interval.

The can support portion may be formed so that an interval between the can support portion and the housing increases at least partially in the one direction.

The can support portion may include a tapered portion whose inner width gradually increases in the one direction.

The can support portion may include an insertion projection at least a part of which protrudes and is inserted into a beading portion formed on the housing, wherein the tapered portion is provided under the insertion projection.

When the punch presses the upper end of the housing, an upper end surface of the can support and the punch may be spaced apart from each other by a certain interval.

The fixing unit may include a plurality of fixing parts that are provided to be separable from each other, wherein a hollow space into which the cylindrical battery is inserted is formed when the plurality of fixing parts face each other.

A corner of a portion where the plurality of fixing parts face each other may be rounded.

At least a part of a corner of the can support portion may include a round portion.

A radius of curvature of the round portion may be about 0.2 mm or more.

### Advantageous Effects

According to an aspect of the present disclosure, because a contact area between a crimping device and an outer circumferential surface of a housing of a cylindrical battery is reduced, scratches on the cylindrical battery may be minimized during a crimping process of the cylindrical battery.

Also, according to another aspect of the present disclosure, a dent or burr phenomenon on a cylindrical battery may be minimized during a crimping process of the cylindrical battery.

Also, according to another aspect of the present disclosure, an outer diameter dimension defect issue of a cylindrical battery may be minimized.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view illustrating a cylindrical battery applied to a crimping device according to an embodiment of the present disclosure.
FIG. 2 is an exploded perspective view illustrating a crimping device according to an embodiment of the present disclosure.
FIG. 3 is a schematic perspective view illustrating a portion of a fixing unit of a crimping device according to an embodiment of the present disclosure.
FIGS. 4 and 5 are views for describing a crimping process of a cylindrical battery using a crimping device according to an embodiment of the present disclosure.
FIG. 6 is an enlarged view illustrating a portion of FIG. 5, to describe a tapered portion of a can support portion
FIG. 7 is an enlarged view illustrating a portion of FIG. 5 to describe that a punch and an upper end surface of a can support portion are spaced apart from each other.
FIG. 8 is a top view illustrating a state where a plurality of fixing parts of a crimping device are coupled according to an embodiment of the present disclosure.
FIG. 9 is a view for describing that a round portion is formed on a can support portion of a crimping device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

Also, the present disclosure includes various embodiments. A repeated description of components substantially the same as or similar to those of previous embodiments will be omitted, and a difference will be mainly described.

It will be understood by one of ordinary skill in the art that when terms indicating directions such as upper, lower, left, right, front, and rear are used, these terms are only for convenience of explanation and may vary according to a position of a target object, a position of an observer, etc.

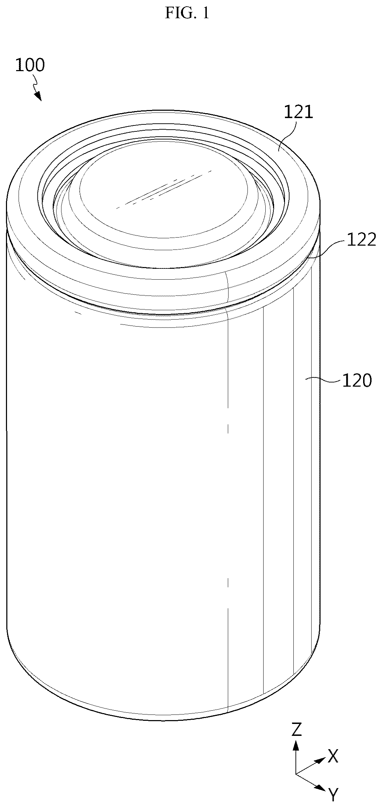

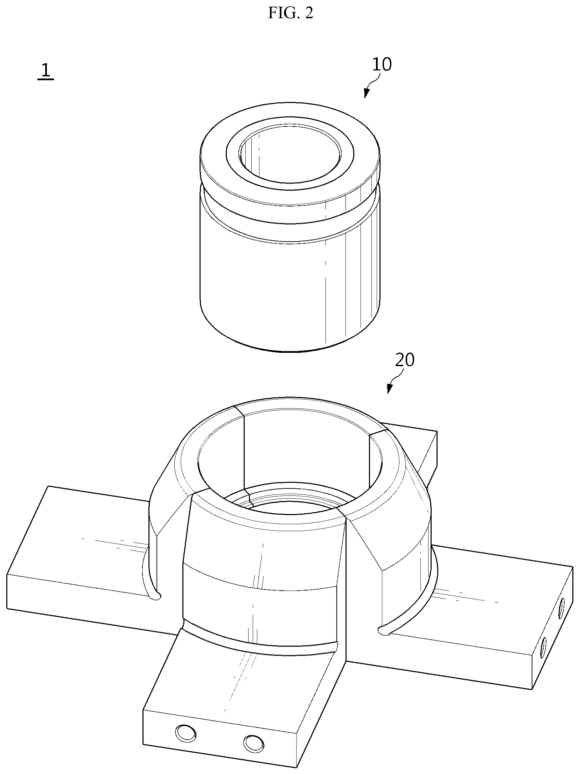

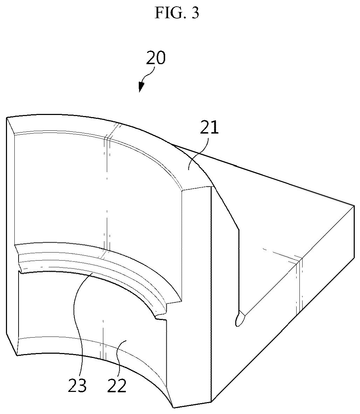

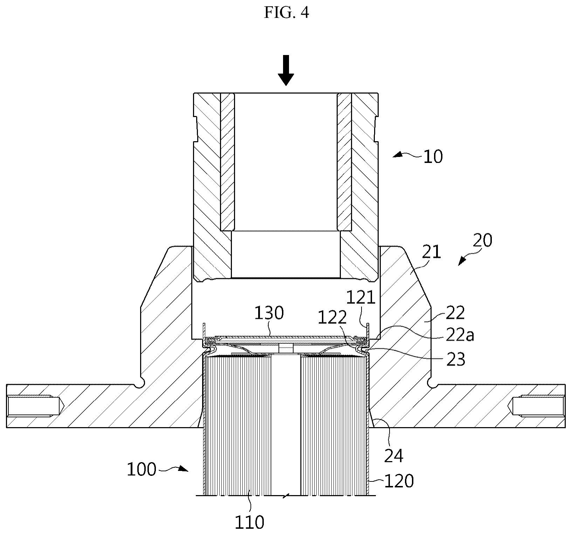

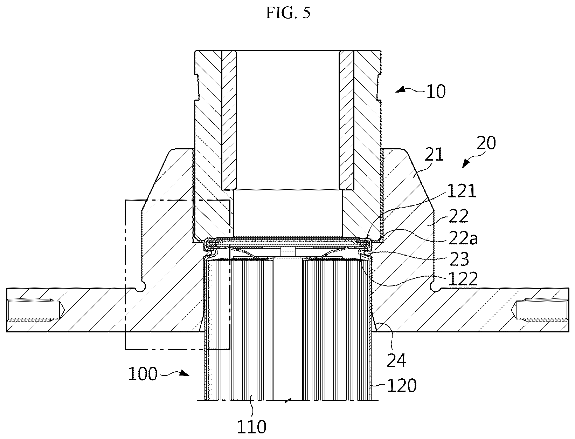

FIG. 1 is a schematic perspective view illustrating a cylindrical battery applied to a crimping device according to an embodiment of the present disclosure. FIG. 2 is an exploded perspective view illustrating a crimping device according to an embodiment of the present disclosure. FIG. 3 is a schematic perspective view illustrating a portion of a fixing unit of a crimping device according to an embodiment of the present disclosure. Also, FIGS. 4 and 5 are views for describing a crimping process of a cylindrical battery using a crimping device according to an embodiment of the present disclosure.

A crimping device 1 according to an embodiment of the present disclosure may be a crimping device configured to crimp an open portion formed on one side of a housing 120 of a cylindrical battery 100.

First, the cylindrical battery 100 applied to the crimping device 1 according to the present disclosure will be described with reference to FIGS. 1 and 4. In the present disclosure, the cylindrical battery 100 applied to the crimping device 1 may include an electrode assembly 110 and a housing 120. In addition, the cylindrical battery 100 may further include a current collector, a terminal, and a top cap 130. The cylindrical battery 100 may be a secondary battery that may be charged and discharged.

The electrode assembly 110 may include a first electrode having a first polarity, a second electrode having a second polarity, and a separator disposed between the first electrode and the second electrode. The electrode assembly 110 may have a jelly-roll structure.

However, in the present disclosure, a battery applied to the crimping device 1 is not limited to a specific type or shape, and various batteries known at the time of filing the application may be applied to the crimping device 1 of the present disclosure. Although the crimping device 1 to which a cylindrical battery is applied as shown in the drawing is a target in the present embodiment, a pouch-type or prismatic battery may be applied to the crimping device 1 of the present disclosure.

The housing 120 may have an open portion formed on one side in a height direction (a direction parallel to a Z-axis). The housing 120 may accommodate the electrode assembly 110 through the open portion. The housing 120 may have a closed portion on the other side in the height direction. That is, in the height direction, an upper end of the housing 120 may be open and a lower end of the housing 120 may be closed.

The housing 120 may be formed of a metal material having conductivity. The housing 120 may be electrically connected to the second electrode of the electrode assembly 110. Accordingly, the housing 120 may have the same second polarity as the second electrode. Electrical connection between the electrode assembly 110 and the housing 120 may be made through, for example, the current collector.

The top cap 130 may be configured to seal the open portion formed on one side of the housing 120.

Referring mainly to FIGS. 2 to 5, the crimping device 1 according to an embodiment of the present disclosure is a device for sealing the cylindrical battery 100 by crimping the open portion of the housing 120 in which the electrode assembly 110 and the top cap 130 are accommodated in a process of manufacturing the cylindrical battery 100.

The crimping device 1 may include a punch 10 and a fixing unit 20. The punch 10 may be configured to crimp the housing 120 by pressing an upper end of the housing 120 during a crimping process.

The fixing unit 20 may be configured to fix the housing 120 so as not to move the housing 120 during the crimping process, and may surround at least a portion of the housing 120. The fixing unit 20 has a hollow space therein, and when the housing 120 is located in the hollow space, the fixing unit 20 may at least partially surround an outer circumferential surface of the housing 120.

In more detail, the fixing unit 20 may include a punch insertion portion 21 and a can support portion 22. The punch insertion portion 21 may be formed so that the punch is inserted. The punch insertion portion 21 may be configured to guide downward movement of the punch 10. The punch insertion portion 21 may be formed so that the punch 10 is vertically inserted.

The can support portion 22 may extend in one direction from the punch insertion portion 21 while forming a stepped portion with the punch insertion portion 21. Here, the term "one direction" may refer to a direction toward the closed portion of the cylindrical battery 100. The can support portion 22 may support at least a portion of the housing 120. In this case, an inner diameter of the can support portion 22 may correspond to an outer diameter of the housing 120 in order to fix the cylindrical battery 100 so that the cylindrical battery 100 does not move.

That is, the fixing unit 20 may be formed so that there is a difference in an inner diameter between a lower end and an upper end. The can support portion 22 may be a portion corresponding to the lower end of the fixing unit 20, and the punch insertion portion 21 may be a portion corresponding to the upper end of the fixing unit 20.

The housing 120 may include a beading portion 122. The beading portion 122 may be formed over the electrode assembly 110. The beading portion 122 may be formed on an end of the battery housing 120 adjacent to the open portion and may be press fitted inward. Fixing of the electrode assembly 110 and assembling of the top cap 130 may be facilitated due to the beading portion 122.

The can support portion 22 may further include an insertion projection protruding in an inner diameter direction. At least a part of the insertion projection may protrude inward and may be inserted into the beading portion 122 formed on the housing 120. Accordingly, when the fixing unit 20 is mounted on the housing 120, the housing 120 may be fixed by the can support portion 22 not to move in an up-down direction, a left-right direction, and a front-back direction.

In this case, a stepped portion forming a boundary between the can support portion 22 and the punch insertion portion 21 may be provided at a higher position than the insertion projection 23. That is, because an inner circumferential direction of the can support portion 22 contacts an outer circumferential surface of a portion of the housing 120 over the beading portion 122, the can support portion 22 may support the portion of the housing 120 over the beading portion 122.

Although a total length of the fixing unit 20 is less than a length of the housing 120 in the present embodiment, the fixing unit 20 may be designed to have a longer or shorter length, and a bracket or a flange may be additionally provided on an outer side of the fixing unit 20 for easy connection with a driving actuator (not shown).

An example of a crimping process of the cylindrical battery 100 using the crimping device 1 according to the present embodiment will be described with reference to FIGS. 4 and 5.

As shown in FIG. 4, the cylindrical battery 100 in which the top cap 130 is assembled may be loaded into the crimping device 21 in a state where the upper end of the housing 120 is open. The cylindrical battery 100 may be first fixed by the fixing unit 20 so that the housing 120 does not move during a crimping process. In this case, the insertion projection 23 of the can support portion 22 may be inserted into the beading portion 122 of the housing 120 to more firmly fix the cylindrical battery 100.

Next, the punch 10 may be disposed in the upper end of the fixing unit 20, that is, in the punch insertion portion 21. When the punch 10 is pre-inserted into the punch insertion portion 21 in a crimping preparation step, the punch 10 may be safely guided in the punch insertion portion 21 from a point at which the punch 10 begins to be lowered to press the upper end of the housing 120. Accordingly, a pressing position error for the upper end of the housing 120 may be reduced compared to when there is no punch insertion portion 21 or the punch 10 is lowered from outside the punch insertion portion 21.

Next, the punch 10 may be lowered toward an upper portion of the can support portion 22 along the outer circumferential surface of the housing 120. In this case, the upper end of the housing 120 in a vertical state may be pressed by the punch 10 and deformed by being inclined at a certain angle toward a central axis of the housing 120 to form a crimping portion 121.

The crimping portion 121 may have a shape extending or bending to surround an edge of the top cap 130 disposed over the beading portion 122. The top cap 130 may be fixed to the beading portion 122 due to the shape of the crimping portion 121.

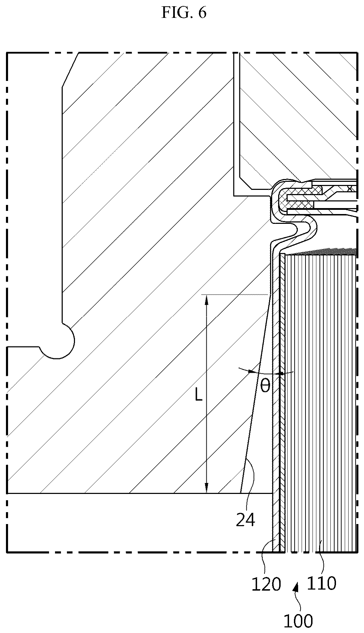

FIG. 6 is an enlarged view illustrating a portion of FIG. 5 to describe a tapered portion of a can support portion.

In this case, referring to FIG. 6, when the cylindrical battery 100 is fixed to the fixing unit 20 of the crimping device 1 in a crimping process of the cylindrical battery 100, the can support portion 22 may be at least partially spaced apart from the housing 120 by a certain interval.

According to the embodiment of the present disclosure, because a contact area between the crimping device 1 and the housing 120 of the cylindrical battery 100 is reduced, scratches on the housing 120 may be reduced during the crimping process of the cylindrical battery 100.

For example, as shown in the embodiment of FIG. 5, at least a portion of the housing 120 under the beading portion 122 may be spaced apart from the can support portion 22.

According to the embodiment of the present disclosure, because a portion of the housing 120 over the beading portion 122 is closely fixed to the can support portion 22, a fixing force to the cylindrical battery 100 may be secured during the crimping process.

In more detail, the can support portion 22 may be formed so that an interval between the can support portion 22 and the housing 120 increases at least partially in one direction. For example, as shown in the embodiment of FIG. 6, the can support portion 22 may be formed so that an interval between the can support portion 22 and the housing 120 increases at least partially downward. That is, an inner diameter of the can support portion 212 may gradually increase downward.

In other words, a portion of the can support portion 22 may have a tapered shape. The can support portion 22 may include a tapered portion 24 whose inner width gradually increases in one direction.

According to the embodiment of the present disclosure, because a contact area between the crimping device 1 and the housing 120 of the cylindrical battery 100 is reduced, scratches on the housing 120 may be minimized during the crimping process of the cylindrical battery 100.

The tapered portion 24 may be provided under the insertion projection 23. The tapered portion 24 may be spaced apart from the insertion projection 23 by a certain interval. For example, a length L of the tapered portion 24 may be about 5 mm to about 35 mm. Here, the length L of the tapered portion 24 may refer to a vertical length of a portion of the can support portion 22 whose inner diameter is changed. Also, an angle θ between the tapered portion 24 and the housing 120 may be about 5° to about 15°.

When a length of the tapered portion 24 is too large or an interval between the tapered portion 24 and the insertion projection 23 is too small, an area where the can support portion 22 fixes under the beading portion 122 of the housing 120 may be small, thereby weakening a fixing force. According to the embodiment of the present disclosure, scratches on the housing 120 may be prevented and a fixing force between the housing 120 and the can support portion 22 may be secured.

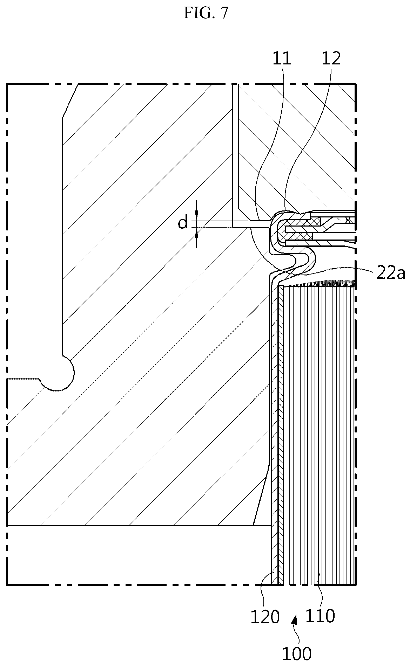

FIG. 7 is an enlarged view illustrating a portion of FIG. 5 to describe that a punch and an upper end surface of a can support portion are spaced apart from each other.

The punch 10 may include a lower surface 11 facing an upper end surface 22a of the can support portion 22 and a pressing surface 12 for pressing the upper end of the housing 120. The pressing surface 12 may include a curved portion and a flat portion substantially horizontal to the ground. Because the punch 10 includes the pressing surface 12 having a curved shape, a curved portion of the upper end of the housing 120 may have a gentle round shape, to relieve stress concentration on the portion.

As shown in the embodiment of FIG. 7, when the punch 10 of the crimping device 1 presses the upper end of the housing 120 during a crimping process of the cylindrical battery 100, the upper end surface 22a of the can support portion 22 and the punch 10 may be spaced apart from each other by a certain interval. That is, the lower surface 11 of the punch 10 and the can support portion 22 may be spaced apart from each other by a certain interval.

According to the embodiment of the present disclosure, because the punch 10 is spaced apart from the upper end surface 22a of the can support portion 22 by a certain interval, a contactable area between an end of the upper end of the housing 120 and the pressing surface 12 is very short. Hence, scratches formed when the end of the upper end of the housing 120 is scratched by the crimping device 1 may be minimized, thereby reducing abrasion of the end of the upper end of the housing 120.

In this case, an interval d between the can support portion 22 and the punch 10 may be minimized. For example, the interval d between the can support portion 22 and the punch 10 may be about 0.3 mm or less. For example, the punch 10 may be lowered from above the fixing unit 20, may enter the fixing unit 20, and may be lowered to a lower end surface of the punch insertion portion 21 in the crimping process of the cylindrical battery 100. In other words, the lowering of the lower surface 11 of the punch 10 may be blocked and limited by the upper end surface 22a of the can support portion 22. According to the embodiment of the present disclosure, because a lowering distance of the punch 10 is controlled to a certain degree, deformation of the crimping portion 121 of the housing 120 may be uniform.

According to the embodiment of the present disclosure, because the interval (d) between the can support portion 22 and the punch 10 is minimized, when the upper end of the housing 120 is greatly deformed by pressure of the punch 10, the portion may be prevented from being pushed outward or a burr may be prevented from occurring through the interval between the upper end surface 22a of the can support portion 22 and the punch 10.

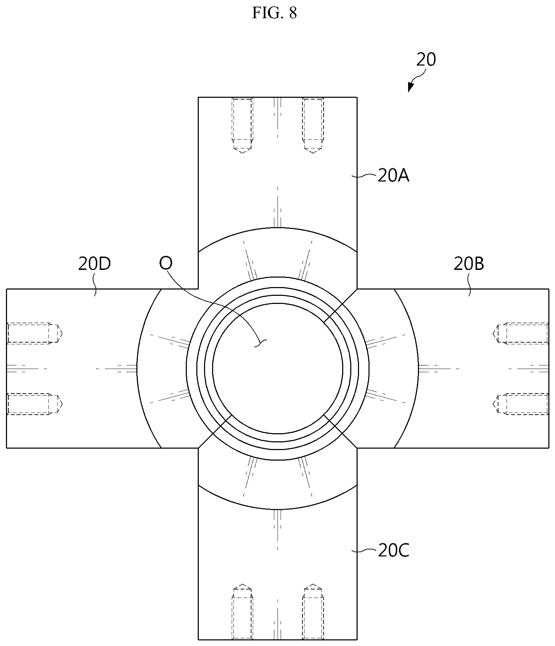

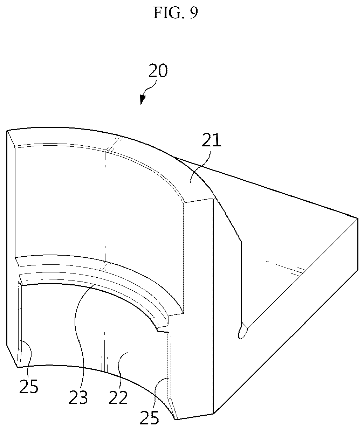

FIG. 8 is a view illustrating a state where a plurality of fixing parts of a crimping device are coupled according to an embodiment of the present disclosure. FIG. 9 is a view for describing that a round portion is formed on a fixing part of a crimping device according to an embodiment of the present disclosure.

The fixing unit 20 according to an embodiment of the present disclosure may include a plurality of fixing parts 20A, 20B, 20C, 20D that are provided to be separable from each other. For example, as in the embodiment of FIGS. 2 and 8, the fixing unit 20 may include four fixing parts 20A, 20B, 20C, 20D that are provided to be separable from each other at an angle of 90°.

The plurality of fixing parts 20A, 20B, 20C, 20D may be connected to each other to form a hollow structure. That is, a hollow space O into which the cylindrical battery 100 is inserted may be formed when the plurality of fixing parts 20A, 20B, 20C, 20D face each other. The fixing parts 20A, 20B, 20C, 20D may be accessed in a horizontal direction with respect to the housing 120 that is upright, to fix the housing 10 along a circumferential direction of the housing 120.

In this case, a corner of a portion where the plurality of fixing parts 20A, 20B, 20C, 20D face each other may be round. In detail, referring to FIG. 9, at least a part of each of the plurality of fixing parts 20A, 20B, 20C, 20D may include a round portion 25. The round portion 25 may be at least partially formed at a corner of the can support portion 22. The round portion 25 may be formed to have a certain radius of curvature by R-processing (round processing) the corner of the can support portion 22. In this case, the radius of curvature of the round portion 25 may be about 0.2 mm or more.

According to the embodiment of the present disclosure, because a contact area between the crimping device 1 and the outer circumferential surface of the housing 120 of the cylindrical battery 100 is reduced, scratches on the cylindrical battery 100 may be minimized during a crimping process of the cylindrical battery 100. Also, according to the embodiment of the present disclosure, dents or burrs on the cylindrical battery 100 may be minimized during a crimping process of the cylindrical battery 100, thereby reducing an outer diameter of the housing 120.

While the present disclosure has been particularly shown and described with reference to exemplary embodiments thereof, it will be understood by one of ordinary skill in the art that various changes in form and details may be made therein without departing from the scope of the present disclosure. Accordingly, the scope of the present disclosure is defined by the following claims described to include examples of many such variations.

## Claims

1. A crimping device configured to crimp a housing of a cylindrical battery, the crimping device comprising:
a punch configured to crimp the housing by pressing an upper end of the housing; and
a fixing unit comprising a punch insertion portion into which the punch is inserted and a can support portion supporting at least a portion of the housing and extending in one direction from the punch insertion portion while forming a stepped portion with the punch insertion portion.

2. The crimping device according to claim 1, wherein the can support portion is at least partially spaced apart from the housing by a certain interval.

3. The crimping device according to claim 2, wherein the can support portion is formed so that an interval between the can support portion and the housing increases at least partially in the one direction.

4. The crimping device according to claim 1, wherein the can support portion comprises a tapered portion whose inner width gradually increases in the one direction.

5. The crimping device according to claim 4, wherein the can support portion comprises an insertion projection at least a part of which protrudes and is inserted into a beading portion formed on the housing,
wherein the tapered portion is provided under the insertion projection.

6. The crimping device according to claim 1, wherein, when the punch presses the upper end of the housing, an upper end surface of the can support and the punch are spaced apart from each other by a certain interval.

7. The crimping device according to claim 1, wherein the fixing unit comprises a plurality of fixing parts that are provided to be separable from each other,
wherein a hollow space into which the cylindrical battery is inserted is formed when the plurality of fixing parts face each other.

8. The crimping device according to claim 7, wherein a corner of a portion where the plurality of fixing parts face each other is rounded.

9. The crimping device according to claim 7, wherein at least a part of a corner of the can support portion comprises a round portion.

10. The crimping device according to claim 9, wherein a radius of curvature of the round portion is about 0.2 mm or more.
